Europäisches Patentamt

European Patent Office

Office européen des brevets

(19)

(11) Veröffentlichungsnummer: **0 370 354**
**A1**

## (12) EUROPÄISCHE PATENTANMELDUNG

(21) Anmeldenummer: **89120997.5**

(22) Anmeldetag: **13.11.89**

(51) Int. Cl.⁵: **E04F 13/08, E04F 13/18, B29C 33/14, F16B 37/12**

(30) Priorität: **25.11.88 CH 4383/88**

(43) Veröffentlichungstag der Anmeldung:
**30.05.90 Patentblatt 90/22**

(84) Benannte Vertragsstaaten:
**AT DE FR GB IT NL**

(71) Anmelder: **CONSTRAL AG**
**Neugrüt**
**CH-8570 Weinfelden(CH)**

(72) Erfinder: **Noah, Widmer**
**Amriswilerstrasse 62**
**CH-8570 Weinfelden(CH)**

(74) Vertreter: **Blum, Rudolf Emil Ernst et al**
**c/o E. Blum & Co Patentanwälte Vorderberg 11**
**CH-8044 Zürich(CH)**

(54) **Verankerung für Wandverkleidungs-Platte und Verfahren zur Herstellung dieser Verankerung.**

(57) Die Verankerung wird durch einen in die Platte (1) versenkten Einsatz (4) gebildet, der an seinem einen Ende ein nahe der einen Plattenoberfläche (3) liegenden tellerartigen Fussteil (8) und an seinem snderen Ende einen im Innern der Platte liegenden, sich ebenfalls tellerartig ausweitenden Kopfteil (6) aufweist. Dazwischen liegt ein eingeschnürtes Mittelteil (7). Der Einsatz ist mit einem zur Platte senkrechten, gegen die eine Plattenoberfläche zu offenen Gewindeloch (9) versehen. Zur Herstellung der Verankerung wird der Einsatz mit seinem Fussteil auf ein Schutzpapier (12) geklebt, ein Agglomerat aus Steingranulat und Harzbindemittel darübergeschüttet und anschliessend unter Wärmeeinwirkung zu einer Platte gepresst.

EP 0 370 354 A1

## Verankerung für Wandverkleidungs-Platte und Verfahren zur Herstellung dieser Verankerung

Es ist bekannt, Wände und insbesondere Fassaden mit Platten aus Natur- oder Kunststeinen zu verkleiden, was angesichts des oft erheblichen Gewichtes solcher Platten und ihrer relativen Brüchigkeit Probleme bei ihrer Befestigung aufwirft, besonders wenn diese von aussen nicht sichtbar sein soll. Dies ist oft erwünscht, weil sichtbare Befestigungen eine Reihe von Nachteilen aufweisen, vor allem, wenn sie der Witterung ausgesetzt sind. Sie erzeugen dann nach einiger Zeit fast unweigerlich störende Schmutz- und/oder Rost-Muster auf der Fassade. Bei hinreichend dicken Verkleidungsplatten ist es bekannt, diese mittels seitlich eingreifenden Krallen zu befestigen, was aber eine gewisse Mindestdicke der Platte, sowie das Bohren von Löchern in ihren Schmalseiten verlangt. Es führt zudem zu verhältnismässig grossen Fugen zwischen benachbarten Platten, was unerwünscht ist.

Es ist das Ziel der Erfindung, diese Nachteile zu vermeiden und eine einfache, sichere und von aussen unsichtbare Verankerung für Wandverkleidungsplatten aus Kunststein sowie ein Verfahren zur Herstellung derselben zu schaffen. Zu diesem Zweck ist die Erfindung, wie in den Ansprüchen 1 und 8 beschrieben, definiert.

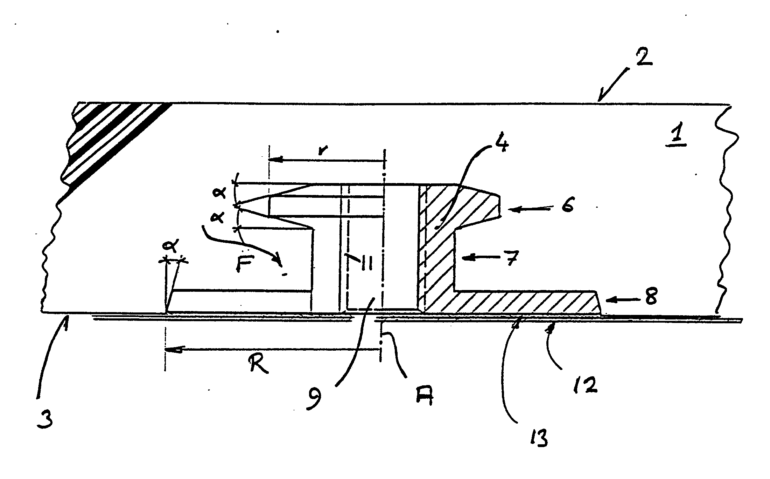

Im folgenden soll die Erfindung anhand der Beschreibung eines Ausführungsbeispiels und der Zeichnung näher erläutert werden.

Es zeigt die einzige Figur einen teilweisen Schnitt durch eine bevorzugte Ausführungsform der Erfindung.

In der einzigen Figur bezeichnet 1 eine Kunststeinplatte, die beispielsweise aus einem warmgepressten Agglomerat aus Steingranulat und einem Harzbindemittel hergestellt sein kann, wobei diese Platte eine als Verkleidungsaussenfläche vorgesehene Vorderseite 2 und eine Rückseite 3 aufweist. In diese Rückseite ist ein Einsatz 4 eingelassen, der um die Achse A rotationssymmetrisch ist und an seinen beiden Enden je eine kragenartige Ausweitung besitzt, wobei r den Aussenradius des kopfteiles 6 und R denjenigen des Fussteiles 8 bezeichnet. Zwischen Kopf- und Fussteil weist der Einsatz 4 einen eingeschnürten Mittelteil 7 auf. Ein um die Achse konzentrischer, durchgehender Hohlraum 9 ist mit einem Innengewinde 11 versehen. Dieses Gewinde bildet die Verankerung für die bei der Montage der Verkleidungsplatte an eine Wand verwendeten rückseitigen Schrauben. Natürlich kann - obwohl die Verwendung normierter Schrauben in der Regel vorzuziehen ist - zu diesem Zweck ein Bajonett-Verschluss verwendet werden; in diesem Fall muss der Hohlraum 9 eine passend hinterschnittene Fassung aufweisen.

Der Einsatz kann aus Metall, vorzugsweise aus rostfreiem Stahl, aber auch aus anderen Materialien - wie etwa gesintertem Material oder einem geeigneten Kunststoff -bestehen.

Es soll nun das Einbringen des Einsatzes 4 in die Kunststeinplatte 1 in einer bevorzugten Ausführungsform beschrieben werden. Grundsätzlich wird die rohe Platte durch Aufschütten einer Mischung von Steingranulat und eines Harzbindemittels in einen Rahmen auf eine ebene Unterlage, gefolgt von einem Warmpressen der aufgeschütteten Masse,bei passend gewählten Druck- und Temperaturwerten hergestellt. Danach wird sie zugeschnitten, geschliffen und fallweise einseitig poliert.

Um die Unterlage zu schonen, und auch um den Transport vor und nach dem Pressen zu erleichtern, ist es üblich, die Unterlage durch ein darüberliegendes Papier zu schützen, welches während des Herstellungsvorganges der Platte zuerst mit dem Schüttgut und danach mit der gepressten Platte längs der Herstellungsstrasse weiterbefördert wird und schliesslich an der fertigen Platte haften bleibt.

Um die Einsätze, in der Regel mindestens vier pro zugeschnittene Platte, in diese einzubringen, kann man die benötigte Anzahl Einsätze vor dem Aufschütten auf das Schutzpapier 12 setzen und mittels einer Leimschicht 13 daran ankleben. Auf diese Weise kann das Schüttgut die Einsätze weder verschieben noch beim Pressen zwischen diesen und die Unterlage kriechen.

Das Einbringen der Einsätze in die Platte kann erfindungsgemäss auch auf andere Weise bewerkstelligt werden, insbesondere wenn man anstatt des oder zusätzlich zum bisher üblichen Papier einen zugeschnittenen Karton (vorzugsweise einen Presskarton) oder eine Kunststoff-Folie als Flächengebilde verwendet. Es ist dann besonders einfach, die Einsätze auf dem Karton oder der Folie anzubringen, bevor diese in den Rahmen auf die Arbeitsunterlage gelegt werden, auf welcher die Platte gepresst wird. Das Flächengebilde wird also zuerst mit Einsätzen bestückt, und dann erst in den zur Herstellung der Platten verwendeten Pressrahmen eingelegt, wobei beide Vorgänge automatisch erfolgen können. Dadurch erreicht man verschiedene Vorteile; insbesondere können die Platten in schnellerer Folge gepresst werden, da das zeitaufwendige Aufsetzen -und fallweise das Anleimen - der Einsätze ausserhalb der eigentlichen Herstellungsstrasse der Platten stattfindet. Zudem können die Einsätze unter Umständen mit grösserer Präzision angebracht werden. Natürlich eignen sich Kunststoff-Folien und vor allem Karton besonders gut für ein solches Verfahren, obwohl es sich auch mit Papier durchführen lässt.

Es ist auch die Verwendung einer Kunststoff-Folie denkbar, welche nicht direkt auf die Arbeitsunterlage der Herstellungsstrasse, sondern selbst auf ein Schutzpapier gelegt wird. In allen Fällen, in denen eine Kunststoff- Folie verwendet und dafür gesorgt wird, dass sie an der fertigen Platte haften bleibt, kann diese Folie nach der Montage der Platte eine doppelte Funktion ausüben. Sie wirkt einerseits als eine auf der Rückseite der Platte angebrachte Dampfsperre und andererseits - falls sie zäh genug ist - als ein Schutzträger, der das Herabfallen von Plattenteilen verhindert, wenn die Platte einmal bröckeln oder brechen sollte.

Das Ankleben der Einsätze auf ein Flächengebilde vor dem Aufschütten des Schüttgutes bietet mehrere Vorteile.

Einerseits kann dadurch die Lage der Einsätze in der fertigen Platte exakt (d.h. bis auf wenige mm) bestimmt werden, da die Einsätze weder durch den Aufschüttvorgang noch durch das Herstellungsmässig wichtige Fliessen des Schüttmaterials während des Press- und Heizvorganges verschoben werden können. Ein präzises Positionieren der Einsätze ist nämlich für die Montage von Verkleidungsplatten äusserst wichtig, da die Fugenbreite zwischen den Platten kritisch davon abhängt, und ein nachträgliches Justieren erfahrungsgemäss kostspielig ist. Andererseits schützt das auf den Einsatz aufgeklebte, flächenhafte Gebilde in Form eines Papieres, eines Presskartons, einer Kunststoff-Folie oder dergleichen, den Einsatz vor dem Eindringen von Schüttgut von unten her in den Hohlraum 9. Das Eindringen von Schüttgut in diesen Hohlraum von oben her kann etwa durch einen darin eingeschraubten Schutzpfropen (in der Zeichnung nicht gezeigt), beispielsweise eine aus Kunststoff hergestellte Madenschraube, verhindert werden. Fallweise genügt diese Schraube, um den für die Montage nötigen Abschnitt des Hohlraumes freizuhalten, sofern sowohl ihre Länge wie ihre Lage passend gewählt sind. Ein Eindringen des Schüttgutes von oben her kann jedoch auch verhindert werden, indem man den Hohlraum 9 als ein Sackloch ausbildet, welches nur am fussseitigen Ende des Einsatzes offen, an seinem kopfseitigen Ende jedoch geschlossen ist. Bei dieser (in der Zeichnung nicht gezeigten) Ausführungsform kann fallweise auf einen Schutzpfropfen verzichtet werden.

Um bei der Montage der Platte ein einfaches und rasches Freilegen der hinter dem Schutzpapier 12 versteckten Einsätze zu ermöglichen, kann zum Aufkleben der Einsätze auf das flächenhafte Gebilde ein Leim verwendet werden, der dieses genügend verfärbt, um von der Aussenseite desselben gesehen zu werden. Auf diese Weise können die Einsätze ohne langes Suchen lokalisiert werden und durch Entfernen des flächenhaften Gebildes für die Montage freigelegt werden.

Um zu gewährleisten, dass das Schüttgut beim Warmpressen leicht und vollständig in das eingeschnürte Mittelteil 7 fliesst (wie durch den Pfeil F angedeutet), ist der Kopfteil 4 beidseitig unter einem Winkel $\alpha$ von etwa 15° abgeschrägt. Aus ähnlichen Gründen ist die Peripherie des Fussteiles um denselben Winkel $\alpha$ abgeschrägt. Es soll aber ausdrücklich bemerkt werden, dass andere Formen möglich sind. Insbesondere kann der eingeschnürte Mittelteil 7 eine gerundete Kehlung bilden, d.h. einen Querschnitt aufweisen, der nicht durch eine Folge gerader Segmente, sondern durch eine gleichmässig gerundete Kurve begrenzt ist. Auch brauchen weder der Einsatz 4 als Ganzes, noch sein Kopf- und/oder Fussteil rotationssymmetrisch zu sein, sondern sie können viele andere Formen aufweisen. Unabhängig von diesen Formen ist vorzugsweise - wie in der Zeichnung gezeigt - die auf eine Oberfläche der Platte 1 projizierte Fläche des Fussteiles 8 mindestens doppelt so gross wie die Projektion des Kopfteiles 6 auf dieselbe Oberfläche. Eine solche Ausbildung bietet verschiedene Vorteile: der grossflächige Fuss begünstigt die Haftung des Einsatzes 4 am Schutzpapier 12 und widersteht wirkungsvoll Drehmomenten, welche auf den Einsatz ausgeübt werden, sei es während der Herstellung durch das seitliche Fliessen des Schüttgutes, sei es während oder nach der Montage der Platte durch Einwirkung auf das Gewinde. Ausserdem nimmt die grosse Fussfläche die beim Festziehen einer in das Gewinde 11 eingreifenden Schraube ausgeübten Anpresskräfte einer Gegenmutter oder einer Halterungslasche auf, ohne sie auf die wesentlich brüchigere Kunststeinplatte zu übertragen. Gleichzeitig gestattet der verhältnismässig kleinere kopfteil beim Herstellen der Platte ein leichtes Fliessen des Materials in Richtung des Mittelteiles 7 und gewährleistett eine sichere Verankerung des Einsatzes in der Kunststeinplatte, ohne diese örtlich übermässig zu schwächen.

## Ansprüche

1. Verankerung an einer Verkleidungsplatte aus Kunststoff, dadurch gekennzeichnet, dass die Platte in einer ihrer Flächen mindestens einen versenkten Einsatz trägt, der einen in der Nähe dieser Plattenfläche liegenden, tellerartig ausgeweiteten Fussteil aufweist, weiter platteneinwärts eingeschnürt ist, und sich dann an seinem von der einen Plattenfläche entfernten Ende zu einem ebenfalls tellerartig ausgeweiteten Kopfteil ausweitet, wobei der Einsatz von der anderen Plattenfläche beabstandet ist und eine zur einen Plattenfläche hin offene Ausnehmung aufweist, die mit einem Gewinde versehen und/oder mindestens teilweise hinterschnitten ist.

2. Verankerung nach Anspruch 1, dadurch gekennzeichnet, dass die Projektion des Fussteiles auf die Ebene der einen Plattenfläche mindestens doppelt so gross ist, wie die Projektion des Kopfteiles auf diese Ebene.

3. Verankerung nach einem der vorhergehenden Ansprüche, dadurch gekennzeichnet, dass die dem Fussteil gegenüberliegende Fläche des Kopfteiles derart um mindestens 10° gegenüber der einen Plattenfläche abgeschrägt ist, dass sich der Kopfteil gegen seine Peripherie hin verjüngt.

4. Verankerung nach einem der vorangehenden Ansprüche, dadurch gekennzeichnet, dass die vom Fussteil abgewandten Flächen des Kopfteiles derart um mindestens 10° gegenüber der einen Plattenfläche abgeschrägt ist, dass sich der Kopfteil gegen seine Peripherie hin verjüngt.

5. Verankerung nach einem der vorangehenden Ansprüche, dadurch gekennzeichnet, dass die Ausnehmung einen den Einsatz durchquerenden Gang bildet.

6. Verankerung nach einem der vorangehenden Ansprüche, dadurch gekennzeichnet, dass der Einsatz im wesentlichen um eine zur einen Plattenfläche senkrechten Achse rotationssymmetrisch ist.

7. Verankerung nach einem der vorangehenden Ansprüche, dadurch gekennzeichnet, dass der Einsatz aus Metall gefertigt ist.

8. Verfahren zur Herstellung einer Verankerung nach Anspruch 1, dadurch gekennzeichnet, dass mindestens ein Einsatz auf ein flächiges Gebilde aufgesetzt wird, dass danach die Grundmaterialien des Kunststeines auf dieses Gebilde geschüttet und zur Bildung der Platte darauf aufgepresst werden.

9. Verfahren nach Anspruch 8, dadurch gekennzeichnet, dass der Einsatz mit seinem Fussteil an das flächige Gebilde angeleimt wird.

10. Verfahren nach Anspruch 9, dadurch gekennzeichnet, dass für das Anleimen ein nach erfolgter Pressung der Platte von der freien Seite des flächigen Gebildes her sichtbarer Leim verwendet wird.

11. Verfahren nach einem der Ansprüche 8 bis 10, dadurch gekennzeichnet, dass das flächige Gebilde aus Papier, Karton oder Kunststoff besteht.

12. Verfahren nach Anspruch 2, dadurch gekennzeichnet, dass das flächige Gebilde aus einem Kunststoff besteht, der permanent mit der darauf aufgepressten Platte verbunden wird.

Europäisches
Patentamt

**EUROPÄISCHER RECHERCHENBERICHT**

Nummer der Anmeldung

EP 89 12 0997

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 271 498 (ROHE) <br> * Spalte 2, Zeile 61 - Spalte 4, Zeile 19; Spalte 6, Zeile 62 - Spalte 7, Zeile 51; Figuren 1-8 * | 1 | E 04 F 13/08 <br> E 04 F 13/18 <br> B 29 C 33/14 <br> F 16 B 37/12 |
| A | | 2,8 | |
| | --- | | |
| Y | GB-A-2 068 831 (SCOTT BADER CO. LTD) <br> * Seite 1, Zeile 69 - Seite 2, Zeile 38; Figuren 1-6 * | 1 | |
| A | | 5,7,8 | |
| | --- | | |
| A | FR-A-2 085 021 (SHUR-LOK CORP.) <br> * Seite 2, Zeile 20 - Seite 4, Zeile 9; Figuren 1-6 * | 1,2,6,7 | |
| | --- | | |
| A | FR-A-1 193 560 (SHUR-LOK CORP.) <br> * Seite 1, rechte Spalte, Zeile 41 - Seite 3, linke Spalte, Zeile 27; Figuren 1-8 * | 1,2,8 | |
| | --- | | |
| A | PATENT ABSTRACTS OF JAPAN, Band 7, Nr. 163 (M-229)[1308], 16. Juli 1983; & JP-A-56 168 340 (KASAI KOGYO K.K.) 25-04-1983 <br> * Ganzes Dokument * | 1,6,7,8 | RECHERCHIERTE SACHGEBIETE (Int. Cl.5) <br><br> E 04 F <br> B 29 C <br> F 16 B |
| | --- | | |
| A | US-A-1 362 640 (ROBERTS) <br> * Seite 2, Zeile 11 - Seite 2, Zeile 70; Figuren 1,2,3 * | 1,6,8 | |
| | --- | | |
| A | DE-A-2 033 261 (RIGIPS BAUSTOFFWERKE) <br> * Seite 4, Zeile 16 - Seite 5, Zeile 27; Figur 1 * | 1,5,6, 11,12 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 09-02-1990 | AYITER J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................................
& : Mitglied der gleichen Patentfamilie, übereinstimmendes Dokument

EPO FORM 1503 03.82 (P0403)